# EUROPEAN PATENT APPLICATION

(11) **EP 1 350 767 A1**
(43) Date of publication of application: **08.10.2003**
(21) Application number: 02007480.3
(22) Date of filing: 02.04.2002
(51) Int. Cl.: C02F 1/28, C02F 1/56

(54) **System of purifying waters from the principal polluting, organic and inorganic, polar and non-polar substances, by thixotropic expanding substances**

(71) Applicant: Schiocchet, Bruno, 32028 Trichiana (BL) (IT)
(72) Inventor: Schiocchet, Bruno, 32028 Trichiana (BL) (IT); Schiocchet, Yuri, 32020 Limana (BL) (IT)

(57) **Abstract**

With the present invention, by the use of minerals available in nature, has been made a system of purifing for the waters produced by human activities urbanistic and of industrial works and being residual of the same activities. Naturally, the prepartion can be used for any other kind of purifing of waters. Using the clayey minerals belonging to the group of the smectytes - available in nature -, we are able to inglobe the principal organic and inorganic, polar and no polar polluting substances, present in the industrial waters that we treated.
The indicated substances have to be used in specific plants.

## Description

The current state of technology propose several kinds of processes for water purifing, also by the use of chemical substances and prepared.

With the present invention, by the use of minerals available in nature, has been made a system of purifing for the waters produced by human activities urbanhistic and of industrial works and being residual of the same activities.

Naturally, the prepared can be used for any other kind of purifing of waters.

The chemical process invented can gives, by the substances that are descripted later, a perfect purifing of industrial waters here listed: waters polluted by solid urban trashes, washing with anionic, cathionic and/or no ionic tensides, waters polluted by galvanotechnic processes, waters polluted by aromatic and/or chlorinated solvents, generic emulsions, waters polluted by pigments, etc..

In nature there are any clayey minerals belonging to the group of the smechtytes derived from the pirofyllite by the substituction of the silicium of the tetrahedric films with an amphoteric and of the same amphoteric with an alcali- earthy metal.

The electric neutrality takes place before by the add of the amphoteric as additional ions and after by metal- ion bonded weakly and, then, exchangeable.

These substances coordinate molecules of water in various amounts in according to their nature, and then the dimension of the film is not constant, but change in according to the number of molecules of water absorbed. In this mode, it create a grid that can expand by saturation with water.

This expanding grid keeps, indifferently, polar and no polar substances in various amount in according to the molecular weight of the substance and the specific surface of the clayey mineral.

Using these clayey minerals belonging to the group of the smechtytes we are able to inglobe the principal organic and inorganic, polar and no polar polluting substances present in the industrial waters that we trated and that we listed at the beginning of the document.

The amounts generally emplied to purify industrial waters are the following:
1. smechtytes 35 gr/lt;
2. FeCl₃ 6% v/v;
3. NaOH as corrector of the pH.

These substances, like we descripted before, have to be used in specific plants. To give an example, here's a chart of a purify plant: 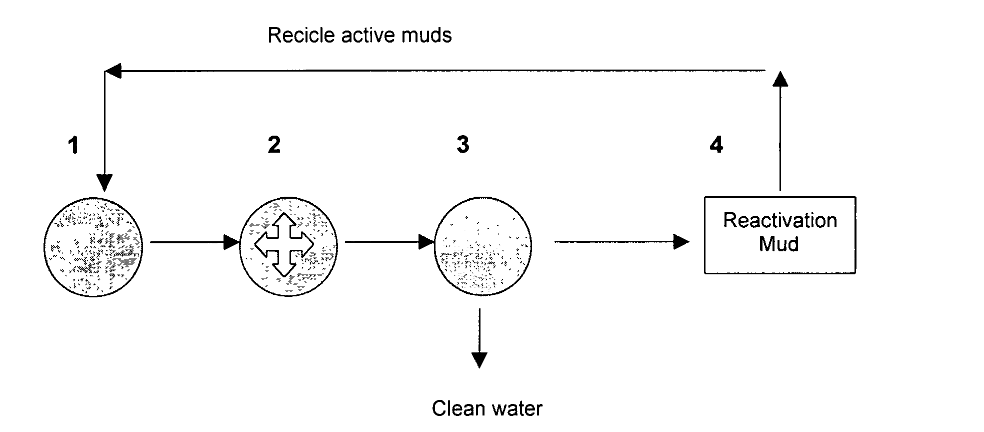
**1.** Polluted water;
**2.** Upsetting unity when adding various kinds of polyelectrolytes and the smechtytes;
**3.** Unity of division solids / liquids;
**4.** Unity of reactivation mud.

Naturally, what have been writed above is not a technycal drawing, but only the examplificative chart of a tipichal plant for the purify of waters with the prepared that is object of this description; naturally, the mixture of the substances indicated in this description can be used also in other purifing plants that are already active and generally used.
***PRACTICHAL EXAMPLES OF USE OF THE MIXTURE IN THE TREATMENT OF INDUSTRIAL WATERS PURIFY: SEE AT THE TABLE ENCLOSED HEREWITH, MAKING CLEAR THAT EVERY COMBINATION OF THE ELEMENTS* / *SUBSTANCES INDICATED IN THE DESCRIPTION IS VINDICATED LICKE INVENTION BY THE WRITERS.***

| ***Sample*** | | ***Galvanotechnic factories waters*** | ***Varnish cabin waters*** | ***Gold factory waters*** | ***Car washing waters*** | ***Hairdresser waters*** | ***Car demolition place waters*** |
|---|---|---|---|---|---|---|---|
| **Parameters** | ***U. M.*** | | | | | | |
| C. O. D. | mg/l O₂ | 560 | | 1860 | | 350 | 1000 |
| **After treatment** | mg/l O₂ | 160 | | 180 | | 80 | 132 |
| **% pulling down** | % | 71,4 | | 90,3 | | 77,1 | 86,8 |
| Fe | mg/l | 20 | | 11 | | | |
| **After treatment** | mg/l | 0,1 | | 2 | | | |
| **% pulling down** | % | 99,5 | | 81,8 | | | |
| Ni | mg/l | 20 | | | | | 1000 |
| **After treatment** | mg/l | 0,5 | | | | | 1 |
| **% pulling down** | % | 97,5 | | | | | 99,9 |
| Anhionic tensides | mg/l | 250 | | 800 | 250 | 100 | 200 |
| **After treatment** | mg/l | 0,9 | 0,5 | 0,4 | 2 | 0,6 | 0,8 |
| **% pulling down** | % | 99,6 | | 99,95 | 99,2 | 99,4 | 99,6 |
| No ionic tensides | mg/l | 60 | | 200 | 10 | 23 | 50 |
| **After treatment** | mg/l | 1,1 | 1 | 1 | 0,6 | 1,2 | 2 |
| **% pulling down** | % | 98,15 | | 99,5 | 94 | 94,78 | 96 |

| ***Sample*** | | ***Laundry waters*** | ***Inks*** | ***Galvanic Chrome*** | ***Galvanic Nichel*** | ***Painting*** | ***Emulsions*** | ***Esters mixture*** | ***Cleansers*** |
|---|---|---|---|---|---|---|---|---|---|
| **Parametri** | **U. M.** | | | | | | | | |
| C. O. D. | mg/l O₂ | 1940 | 8630 | n. r. | 2890 | 25430 | 69000 | 47250 | 52080 |
| **After treatment** | mg/ l O₂ | 470,4 | 137,2 | n. r. | 156,8 | 1372 (2) | 4194,4 | 2410,8 | 490 (2) |
| **% pulling down** | % | 75,6 | 98,4 | n. r. | 94,6 | 94,6 | 93,9 | 94,9 | 99,9 |
| Ni | mg/l | | | | 470 | | | | |
| **After treatment** | mg/l | | | | 2 | | | | |
| **% pulling down** | % | | | | 99,9 | | | | |
| Cr | mg/l | | | | 208 | | | | |
| **After treatment** | mg/l | | | | assente | | | | |
| **% pulling down** | % | | | | 100,00% | | | | |
| Anionic Tensides | mg/l | 70 | n.r. | 2,1 | 835 | 321 | 11,1 | <0,3 | 3725 |
| **treatment** | | 1,7 | 0,96 | | 33 | | 10,9 | <0,3 | n. r. |
| **% pulling down** | % | 97,6 | | | 96 | 1,8 | | | |
| No ionic tensides | mg/l | 48 | 110 | <0,3 | 37,8 | 240 | 980 | <0,3 | 1200 |
| **After treatment** | mg/l | 2,4 | 2,4 | | 1,5 | | 14,6 | 0,3 | |
| **% pulling down** | % | 95 | 97,8 | | 96 | | 98,5 | | |

## Claims

1. The simultaneos employ of natural clayey minerals and polyelectrolytes for purifing of polluted waters from these organic and inorganic, polar and no polar substances, like, for example:
• Waters polluted by solid urban trashes;
• Washing with anionic, cathionic and/or ionic tensides;
• Waters polluted by galvanotechnic processes;
• Waters polluted by aromathic and/or chlorinated solvents;
• General emulsions;
• Waters polluted by pigments;
• Etc..

2. The purifing plant projected and/or built like outline of the description.
